# EUROPÄISCHE PATENTSCHRIFT

(11) **EP 1 633 590 B1**
(45) Veröffentlichungstag und Bekanntmachung des Hinweises auf die Patenterteilung: **15.11.2006**
(21) Anmeldenummer: 04741651.6
(22) Anmeldetag: 26.05.2004
(51) Int. Cl.: B60K 15/077, F02M 37/02

(54) **KRAFTSTOFFVERSORGUNGSANLAGE**
FUEL-SUPPLY SYSTEM
SYSTEME D'ALIMENTATION EN CARBURANT

(30) Priorität: 16.06.2003 DE 10327320
(43) Veröffentlichungstag der Anmeldung: 15.03.2006
(73) Patentinhaber: SIEMENS AKTIENGESELLSCHAFT, 80333 München (DE)
(72) Erfinder: TITTMANN, Michael, 63454 Hanau (DE)
(86) Internationale Anmeldenummer: PCT/EP2004/050924
(87) Internationale Veröffentlichungsnummer: WO 2004/113111

(56) Entgegenhaltungen:
- EP-A- 0 979 939
- EP-A- 1 122 423
- EP-A- 1 302 354
- US-A- 2 953 156

## Beschreibung

Die Erfindung betrifft eine Kraftstoffversorgungsanlage zum Fördern von Kraftstoff aus einem Kraftstoffbehälter zu einer Brennkraftmaschine eines Kraftfahrzeuges mit mehreren, in dem Kraftstoffbehälter angeordneten Fördereinheiten, bei der die Fördereinheiten jeweils einen Schwalltopf zum Sammeln von Kraftstoff und zumindest eine Saugstrahlpumpe zur Befüllung eines der Schwalltöpfe aufweisen.

Solche Kraftstoffversorgungsanlagen sind aus der EP 979939 A bekannt und werden beispielsweise für Kraftfahrzeuge mit einer hohen Leistungsaufnahme und engen Kraftstoffbehältern, bei denen eine einzelne, leistungsstarke Fördereinheit häufig nicht montiert werden kann, eingesetzt und sind aus der Praxis bekannt. Die Befüllung der Schwalltöpfe erfolgt durch die in den Schwalltöpfen angeordneten Kraftstoffpumpen und/oder durch die Aufteilung von von der Brennkraftmaschine in den Kraftstoffbehälter zurückgeführtem Kraftstoff und über die Saugstrahlpumpen, welche Kraftstoff aus dem Kraftstoffbehälter in den Schwalltöpfen sammeln. Die Saugstrahlpumpen werden meist von den Fördereinheiten mit Kraftstoff als Treibmittel versorgt.

Nachteilig bei den bekannten Kraftstoffversorgungsanlagen ist, dass eine ständige Befüllung aller Schwalltöpfe mit Kraftstoff nicht bei allen Anwendungen zuverlässig gewährleistet werden kann. Beispielsweise haben heutige Kraftfahrzeuge häufig keine Rücklaufleitung oder in bestimmten Lastzuständen der Brennkraftmaschine wird wenig Kraftstoff über die Rücklaufleitung zurückgeführt. Die Befüllung des Schwalltopfes über die aus dem Kraftstoffbehälter ansaugende Saugstrahlpumpe bzw. die 1. Pumpenstufe kann beispielsweise bei Kurvenfahrt dazu führen, dass die Saugstrahlpumpe bzw. die Ansaugstelle aus dem Kraftstoff austaucht und keine Befüllung des jeweiligen Schwalltopfes stattfindet. Daher besteht die Gefahr, dass einer der Schwalltöpfe leer läuft, obwohl ausreichend Kraftstoff im Kraftstoffbehälter vorhanden ist. Bei einem Leerlaufen eines der Schwalltöpfe besteht jedoch die Gefahr eines Trockenlaufens und damit einer Beschädigung einer Kraftstoffpumpe der in diesem Schwalltopf angeordneten Fördereinheit.

Der Erfindung liegt das Problem zugrunde, eine Kraftstoffversorgungsanlage der eingangs genannten Art so zu gestalten, dass der Kraftstoff zuverlässig über die Schwalltöpfe verteilt wird.

Dieses Problem wird erfindungsgemäß dadurch gelöst, dass eine Saugseite der zur Befüllung eines ersten Schwalltopfes vorgesehenen Saugstrahlpumpe in einem zweiten Schwalltopf angeordnet ist.

Durch diese Gestaltung lässt sich Kraftstoff aus einem ausreichend gefüllten Schwalltopf mittels der Saugstrahlpumpe absaugen und dem anderen, nicht ausreichend gefüllten Schwalltopf zuführen. Damit wird der in einem der Schwalltöpfe gesammelte Kraftstoff über die übrigen Schwalltöpfe verteilt. Eine Verteilung des von der Rücklaufleitung zurückgeführten Kraftstoffs ist daher nicht erforderlich. Daher ist die erfindungsgemäße Kraftstoffversorgungsanlage auch für Kraftfahrzeuge mit rücklauflosen Brennkraftmaschinen geeignet.

Zur weiteren Vergleichmäßigung der Verteilung des Kraftstoffs trägt es gemäß einer vorteilhaften Weiterbildung der Erfindung bei, wenn in jedem der Schwalltöpfe eine Saugstrahlpumpe angeordnet ist, welche Kraftstoff in einen anderen Schwalltopf fördert. Hierdurch fördern zwei Saugstrahlpumpen gegeneinander und erzeugen damit einen annähernd gleichen Füllstand an Kraftstoff in den Schwalltöpfen.

Eine Überfüllung einer der Schwalltöpfe lässt sich gemäß einer anderen vorteilhaften Weiterbildung der Erfindung einfach vermeiden, wenn die Saugstrahlpumpen jeweils im Wesentlichen dieselbe Förderleistung aufweisen.

Ein Form- oder Montagefehler der Förderleitung der Saugstrahlpumpe kann die Förderleistung dieser Saugstrahlpumpe drosseln. Ein Leerlaufen einer der Schwalltöpfe durch eine ungleichmäßige Förderungsleistung mehrerer Saugstrahlpumpen lässt sich gemäß einer anderen vorteilhaften weiterbildung der Erfindung einfach vermeiden, wenn die Saugseiten der Saugstrahlpumpen oberhalb einer vorgesehenen Mindesthöhe im Schwalltopf angeordnet sind. Damit kann der jeweilige Schwalltopf durch die Saugstrahlpumpen nicht unter die vorgesehene Mindesthöhe entleert werden.

Die erfindungsgemäße Kraftstoffversorgungsanlage gestaltet sich konstruktiv besonders einfach, wenn jede der in den ersten Schwalltopf fördernden Saugstrahlpumpen eine einzelne, in den ersten Schwalltopf führende Förderleitung aufweist.

Die Montage der erfindungsgemäßen Kraftstoffversorgungsanlage in dem Kraftstoffbehälter gestaltet sich besonders einfach, wenn in unterschiedlichen Schwalltöpfen angeordnete Saugstrahlpumpen eine gemeinsame Sammelleitung aufweisen. Durch diese Gestaltung wird die Anzahl der zu verlegenden Leitungen besonders gering gehalten.

Zur weiteren Vergleichmäßigung der Verteilung des Kraftstoffs trägt es gemäß einer anderen vorteilhaften Weiterbildung der Erfindung bei, wenn die Sammelleitung für jeden der Schwalltöpfe jeweils einen mit der Saugstrahlpumpe verbundenen Zufluss und einen mit dem Schwalltopf verbundenen Abfluss aufweist. Bei der Sammelleitung kann es sich selbstverständlich auch um einen Sammelbehälter handeln. Der Zu- und Abfluss kann dabei auch durch je eine gemeinsame Leitung erfolgen.

Bei Kraftfahrzeugen mit Rücklauf erfordert der Betrieb der Saugstrahlpumpen gemäß einer anderen vorteilhaften Weiterbildung der Erfindung einen besonders geringen Aufwand, wenn Treibmittelanschlüsse der Saugstrahlpumpen mit einer Kraftstoff von einer Brennkraftmaschine in den Kraftstoffbehälter rückführenden Rücklaufleitung verbunden sind.

Eine Unterbrechung der Förderung der Saugstrahlpumpen bei einem Ausbleiben der von der Brennkraftmaschine zurückgeführten Strömung an Kraftstoff lässt sich gemäß einer anderen vorteilhaften Weiterbildung der Erfindung einfach vermeiden, wenn die Treibmittelanschlüsse der Saugstrahlpumpen mit der in demselben Schwalltopf angeordneten Fördereinheit verbunden sind. Vorzugsweise werden die Saugstrahlpumpen über eine Hauptstufe der jeweiligen Fördereinheit mit Kraftstoff als Treibmittel versorgt, während die Vorstufe zur unmittelbaren Befüllung des Schwalltopfes vorgesehen ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: schematisch eine erfindungsgemäße Kraftstoffversorgungsanlage mit zwei Fördereinheiten,
- Fig. 2: schematisch eine weitere Ausführungsform der erfindungsgemäßen Kraftstoffversorgungsanlage mit einer Sammelleitung,
- Fig. 3: schematisch eine weitere Ausführungsform der erfindungsgemäßen Kraftstoffversorgungsanlage,

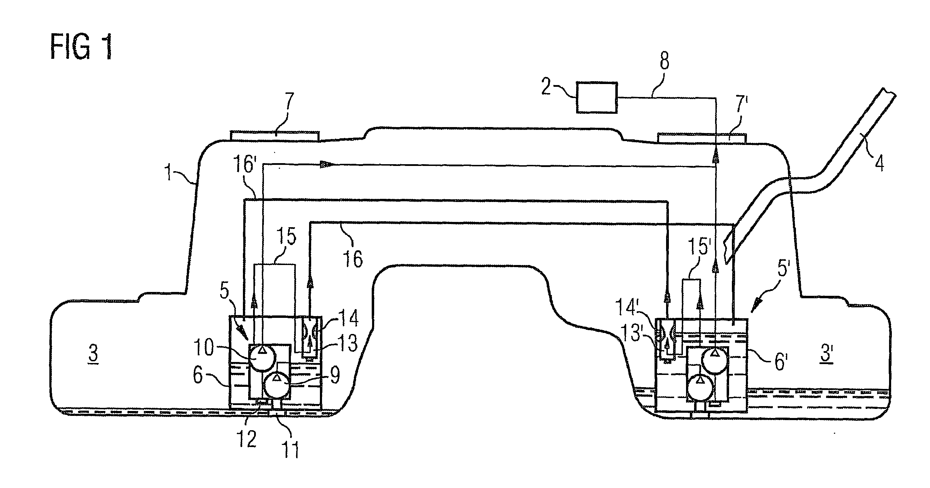

Figur 1 zeigt einen Kraftstoffbehälter 1 für ein Kraftfahrzeug mit einer Kraftstoffversorgungsanlage zur Versorgung einer Brennkraftmaschine 2 mit Kraftstoff. Der Kraftstoffbehälter 1 ist als Satteltank mit zwei Kammern 3, 3' ausgebildet und hat einen Einfüllstutzen 4. Die Kraftstoffversorgungsanlage hat zwei Fördereinheiten 5, 5' mit jeweils einem Schwalltopf 6, 6'. Unmittelbar oberhalb der Fördereinheiten 5, 5' weist der Kraftstoffbehälter 1 Montageflansche 7, 7' auf. Durch einen der Montageflansche 7, 7' wird eine von den Fördereinheiten 5, 5' zu der Brennkraftmaschine 2 geführte Vorlaufleitung 8 hindurchgeführt. Hierbei handelt es sich um eine sogenannte rücklauflose Kraftstoffversorgungsanlage, bei der kein von der Brennkraftmaschine 2 unverbrauchter Kraftstoff in den Kraftstoffbehälter 1 zurückgeführt wird.

Die Fördereinheiten 5, 5' sind jeweils elektrisch angetrieben und haben jeweils eine Vorstufe 9 und eine Hauptstufe 10. Die Vorstufe 9 fördert Kraftstoff aus dem Kraftstoffbehälter 1 in den Schwalltopf 6, während die Hauptstufe 10 Kraftstoff aus dem Schwalltopf 6 über die Vorlaufleitung 8 zu der Brennkraftmaschine 2 fördert. Die Vorstufe 9 hat einen im Kraftstoffbehälter 1 angeordneten Filter 11. Ein Filter 12 der Hauptstufe 10 ist im Schwalltopf 6 angeordnet.

Weiterhin zeigt Figur 1, dass in einer vorgesehenen Höhe der Schwalltöpfe 6, 6' jeweils eine Saugseite 13, 13' einer Saugstrahlpumpe 14, 14' angeordnet ist. Die Saugstrahlpumpen 14, 14' weisen jeweils mit der in demselben Schwalltopf 6, 6' angeordneten Hauptstufe 10 verbundene Treibmittelanschlüsse 15, 15' und in den jeweils anderen Schwalltopf 6, 6' mündende Förderleitungen 16, 16' auf. Über die Treibmittelanschlüsse 15, 15' werden die Saugstrahlpumpen 14, 14' mit Kraftstoff als Treibmittel versorgt. Hierdurch saugen die Saugstrahlpumpen 14, 14' Kraftstoff aus dem jeweiligen Schwalltopf 6, 6' an und fördern diesen in den anderen Schwalltopf 6, 6'. Sinkt der Füllstand an Kraftstoff in einem der Schwalltöpfe 6, 6' unterhalb der Höhe der Saugseite 13, 13' der Saugstrahlpumpen 14, 14', unterbleibt die Förderung von Kraftstoff aus diesem Schwalltopf 6, 6' heraus. In diesem Fall wird der Schwalltopf 6, 6' über die Saugstahlpumpe 14, 14' des anderen Schwalltopfes 6, 6' mit Kraftstoff befüllt.

Selbstverständlich kann die Kraftstoffversorgungsanlage auch mehr als die beiden dargestellten Schwalltöpfe 6, 6' aufweisen. In diesem Fall wären die Förderleitungen 16, 16' der Saugstrahlpumpen 14, 14' vorzugsweise in einer Reihe zu verlegen, so dass jede der Saugstrahlpumpen 14, 14' den nächsten Schwalltopf 6, 6' befüllt.

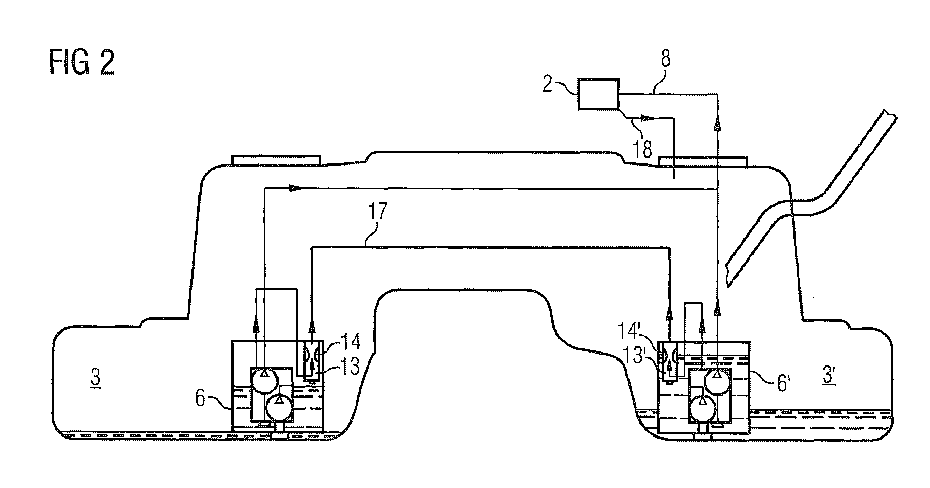

Figur 2 zeigt eine weitere Ausführungsform der Kraftstoffversorgungsanlage, welche sich von der aus Figur 1 dadurch unterscheidet, dass die Saugstrahlpumpen 14, 14' der beiden Schwalltöpfe 6, 6' über eine Sammelleitung 17 miteinander verbunden sind. Damit fördern die Saugstrahlpumpen 14, 14' den Kraftstoff in die gemeinsame Sammelleitung 17 und bauen dort einen Druck auf. Sinkt in einem der Schwalltöpfe 6, 6' der Füllstand an Kraftstoff unterhalb der Höhe der Saugseite 13, 13' der darin angeordneten Saugstrahlpumpe 14, 14', verringert sich schlagartig die Förderleistung dieser Saugstrahlpumpe 14, 14', so dass Kraftstoff von der Saugstrahlpumpe 14, 14' des anderen Schwalltopfes 6, 6' über die Sammelleitung strömt. Weiterhin zeigt Figur 2, dass eine Rücklaufleitung 18 von der Brennkraftmaschine 2 in den Kraftstoffbehälter 1 geführt ist. Die Rücklaufleitung 18 mündet hier unmittelbar in den Kraftstoffbehälter 1 und kann bei rücklauflosen Systemen weggelassen werden.

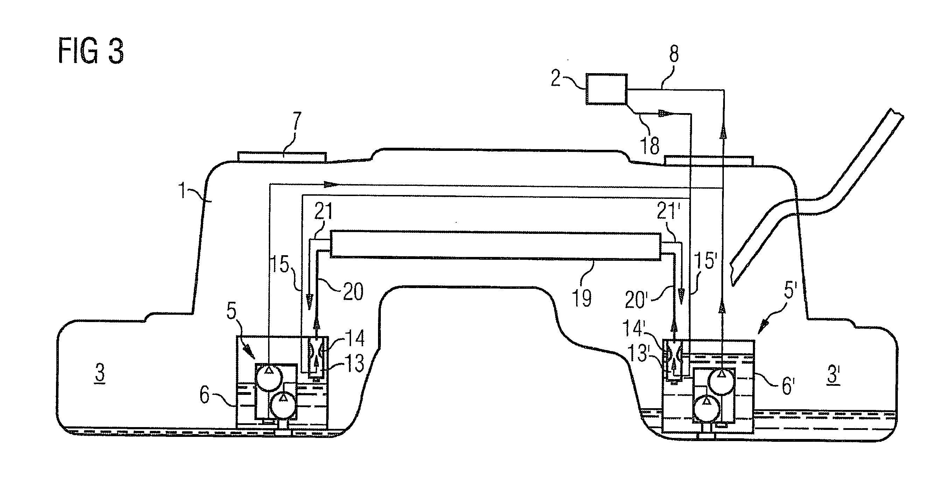

Figur 3 zeigt eine weitere Ausführungsform der Kraftstoffversorgungsanlage, welche sich von der aus Figur 2 vor allem dadurch unterscheidet, dass die Treibmittelanschlüsse 15, 15' der in den Schwalltöpfen 6, 6' angeordneten Saugstrahlpumpen 14, 14' mit der Rücklaufleitung 18 verbunden sind. Beide Saugstrahlpumpen 14, 14' fördern den Kraftstoff in eine gemeinsame Sammelleitung 19. Die Sammelleitung 19 hat zur Verteilung des geförderten Kraftstoffs jeweils einen mit den Saugstrahlpumpen 14, 14 verbundenen Zufluss 20, 20' und jeweils einen in die Schwalltöpfe 6, 6' mündenden Abfluss 21, 21'. Selbstverständlich kann auch diese Kraftstoffversorgungsanlage über die Fördereinheiten 5, 5' anstelle über die Rücklaufleitung 18 mit Kraftstoff als Treibmittel versorgt werden. Wenn in einem der Schwalltöpfe 6, 6' der Füllstand an Kraftstoff unterhalb der Höhe der Saugseite 13, 13' der Saugstrahlpumpe 14, 14' sinkt, wird aus diesem Schwalltopf 6, 6' kein Kraftstoff mehr herausgefördert. Da über die Abflüsse 21, 21' der Sammelleitung 19 insgesamt geförderter Kraftstoff über alle Schwalltöpfe 6, 6' im Wesentlichen gleichmäßig verteilt wird, gleichen sich die Füllstände der Schwalltöpfe 6, 6' aus.

## Patentansprüche

1. Kraftstoffversorgungsanlage zum Fördern von Kraftstoff aus einem Kraftstoffbehälter zu einer Brennkraftmaschine eines Kraftfahrzeuges mit mehreren, in dem Kraftstoffbehälter angeordneten Fördereinheiten, bei der die Fördereinheiten jeweils einen Schwalltopf zum Sammeln von Kraftstoff und zumindest eine Saugstrahlpumpe zur Befüllung eines der Schwalltöpfe aufweisen, **dadurch gekennzeichnet, dass** eine Saugseite (13, 13') der zur Befüllung eines ersten Schwalltopfes (6, 6') vorgesehenen Saugstrahlpumpe (14, 14') in einem zweiten Schwalltopf (6, 6') angeordnet ist.

2. Kraftstoffversorgungsanlage nach Anspruch 1, **dadurch gekennzeichnet, dass** in jedem der Schwalltöpfe (6, 6') eine Saugstrahlpumpe (14, 14') angeordnet ist, welche Kraftstoff in einen anderen Schwalltopf (6, 6') fördert.

3. Kraftstoffversorgungsanlage nach Anspruch 1 oder 2, **dadurch gekennzeichnet, dass** die Saugstrahlpumpen (14, 14') jeweils im Wesentlichen dieselbe Förderleistung aufweisen.

4. Kraftstoffversorgungsanlage nach zumindest einem der vorhergehenden Ansprüche, **dadurch gekennzeichnet, dass** die Saugseiten (13, 13') der Saugstrahlpumpen (14, 14') oberhalb einer vorgesehenen Mindesthöhe im Schwalltopf (6, 6') angeordnet sind.

5. Kraftstoffversorgungsanlage nach zumindest einem der vorhergehenden Ansprüche, **dadurch gekennzeichnet, dass** jede der in den ersten Schwalltopf (6, 6') fördernden Saugstrahlpumpen (14, 14') eine einzelne, in den ersten Schwalltopf (6, 6') führende Förderleitung aufweist.

6. Kraftstoffversorgungsanlage nach zumindest einem der vorhergehenden Ansprüche, **dadurch gekennzeichnet, dass** in unterschiedlichen Schwalltöpfen (6, 6') angeordnete Saugstrahlpumpen (14, 14') eine gemeinsame Sammelleitung (17, 19) aufweisen.

7. Kraftstoffversorgungsanlage nach zumindest einem der vorhergehenden Ansprüche, **dadurch gekennzeichnet, dass** die Sammelleitung (19) für jeden der Schwalltöpfe (6, 6') jeweils einen mit der Saugstrahlpumpe (14, 14') verbundenen Zufluss (20) und einen mit dem Schwalltopf (6, 6') verbundenen Abfluss (21) aufweist.

8. Kraftstoffversorgungsanlage nach zumindest einem der vorhergehenden Ansprüche, **dadurch gekennzeichnet, dass** Treibmittelanschlüsse (15, 15') der Saugstrahlpumpen (14, 14') mit einer Kraftstoff von einer Brennkraftmaschine in den Kraftstoffbehälter rückführenden Rücklaufleitung (18) verbunden sind.

9. Kraftstoffversorgungsanlage nach zumindest einem der vorhergehenden Ansprüche, **dadurch gekennzeichnet, dass** die Treibmittelanschlüsse (15, 15') der Saugstrahlpumpen (14, 14') mit der in demselben Schwalltopf (6, 6') angeordneten Fördereinheit (5, 5') verbunden sind.

## Claims

1. Fuel supply system for feeding fuel from a fuel tank to an internal combustion engine of a motor vehicle with a plurality of feed units arranged in Fuel tank, in which the feed units each have a surge chamber for collecting fuel and at least one suction jet pump for filling one of the surge chambers, **characterized in that** a suction side (13, 13') of the suction jet pump (14, 14') provided for filling a first surge chamber (6, 6') is arranged in a second surge chamber (6, 6').

2. Fuel supply system according to Claim 1, **characterized in that** a suction jet pump (14, 14') is arranged in each of the surge chambers (6, 6') and feeds fuel into another surge chamber (6, 6').

3. Fuel supply system according to Claim 1 or 2, **characterized in that** the suction jet pumps (14, 14') in each case have essentially the same feed capacity.

4. Fuel supply system according to at least one of the preceding claims, **characterized in that** the suction sides (13, 13') of the suction jet pumps (14, 14') are arranged above a designated minimum height in the surge chamber (6, 6').

5. Fuel supply system according to at least one of the preceding claims, **characterized in that** each of the suction jet pumps (14, 14') feeding into the first surge chamber (6, 6') has an individual feed line leading into the first surge chamber (6, 6').

6. Fuel supply system according to at least one of the preceding claims, **characterized in that** suction jet pumps (14, 14') arranged in different surge chambers (6, 6') have a common collecting line (17, 19).

7. Fuel supply system according to at least one of the preceding claims, **characterized in that** the collecting line (19) for each of the surge chambers (6, 6') in each case has an inflow (20) connected to the suction jet pump (14, 14') and an outflow (21) connected to the surge chamber (6, 6').

8. Fuel supply system according to at least one of the preceding claims, **characterized in that** working fluid connections (15, 15') of the suction jet pumps (14, 14') are connected to a return line (18) returning fuel from an internal combustion engine into Fuel tank.

9. Fuel supply system according to at least one of the preceding claims, **characterized in that** the working fluid connections (15, 15') of the suction jet pumps (14, 14') are connected to the feed unit (5, 5') arranged in the same surge chamber (6, 6').

## Revendications

1. Système d'alimentation en carburant, destiné à transférer du carburant d'un réservoir à carburant vers un moteur à combustion interne d'un véhicule automobile et comportant plusieurs unités de transfert disposées dans le réservoir à carburant, où les unités de transfert comportent chacune un pot d'accumulation, destiné à collectionner du carburant, et au moins une pompe à jet aspirant permettant de remplir l'un des pots d'accumulation, **caractérisé par le fait qu'**un côté aspiration (13, 13') de la pompe à jet aspirant (14, 14') prévue pour le remplissage d'un premier pot d'accumulation (6, 6') est disposé dans un deuxième pot d'accumulation (6, 6').

2. Système d'alimentation en carburant selon la revendication 1, **caractérisé par le fait qu'**une pompe à jet aspirant (14, 14') est installée dans chacun des pots d'accumulation (6, 6') et qu'elle transfère du carburant dans un autre pot d'accumulation (6, 6').

3. Système d'alimentation en carburant selon la revendication 1 ou 2, **caractérisé par le fait que** les pompes à jet aspirant (14, 14') ont, pour l'essentiel, chacune la même puissance de transfert.

4. Système d'alimentation en carburant selon au moins l'une des revendications précédentes, **caractérisé par le fait que** les côtés aspiration (13, 13') des pompes à jet aspirant (14, 14') sont placés au-dessus d'une hauteur minimum prévue dans le pot d'accumulation (6, 6').

5. Système d'alimentation en carburant selon au moins l'une des revendications précédentes, **caractérisé par le fait que** chacune des pompes à jet aspirant (14, 14') qui transfère du carburant dans le premier pot d'accumulation (6, 6') a une conduite de transfert séparée conduisant dans le premier pot d'accumulation (6, 6').

6. Système d'alimentation en carburant selon au moins l'une des revendications précédentes, **caractérisé par le fait que** des pompes à jet aspirant (14, 14') installées dans différents pots d'accumulation (6, 6') ont une conduite collectrice commune (17, 19).

7. Système d'alimentation en carburant selon au moins l'une des revendications précédentes, **caractérisé par le fait que** la conduite collectrice (19) a, pour chacun des pots d'accumulation (6, 6'), une entrée (20) reliée à la pompe à jet aspirant (14, 14') et une sortie (21) reliée au pot d'accumulation (6, 6').

8. Système d'alimentation en carburant selon au moins l'une des revendications précédentes, **caractérisé par le fait que** les raccordements de fluide moteur (15, 15') des pompes à jet aspirant (14, 14') sont raccordés à une conduite de retour (18) ramenant du carburant d'un moteur à combustion interne dans le réservoir à carburant.

9. Système d'alimentation en carburant selon au moins l'une des revendications précédentes, **caractérisé par le fait que** les raccordements de fluide moteur (15, 15') des pompes à jet aspirant (14, 14') sont raccordés à l'unité de transfert (5, 5') installée dans le même pot d'accumulation (6, 6') .
